# EUROPEAN PATENT APPLICATION

(11) **EP 4 815 166 A1**
(43) Date of publication of application: **30.09.2026**
(21) Application number: 24895438.0
(22) Date of filing: 16.05.2024
(51) Int. Cl.: H01M 50/449, H01M 50/44, H01M 50/446

(54) **SEPARATOR, BATTERY AND ELECTRIC DEVICE**

(30) Priority: 29.11.2023 CN 202311628161
(71) Applicant: Contemporary Amperex Technology Co., Limited, Ningde, Fujian 352100 (CN)
(72) Inventor: WU, Kai, Ningde, Fujian 352100 (CN); WEI, Manxiang, Ningde, Fujian 352100 (CN); XU, Ming, Ningde, Fujian 352100 (CN); XIAO, Zhiwei, Ningde, Fujian 352100 (CN); ZHANG, Peng, Ningde, Fujian 352100 (CN); YANG, Jianrui, Ningde, Fujian 352100 (CN)
(74) Representative: Gong, Jinping
(86) International application number: PCT/CN2024/093574
(87) International publication number: WO 2025/112327

(57) **Abstract**

Disclosed in the present application are a separator, a battery and an electric device. The separator comprises a porous substrate and a coating arranged on at least one surface of the porous substrate, wherein the coating comprises a fiber material and a granular filler, the fiber material comprises a first fiber material and a second fiber material, the average length of the first fiber material is denoted as L₁, the average length of the second fiber material is denoted as L₂, L₁ is greater than 800 nm, and L₁/L₂ is greater than or equal to 2.4. The present application enables the battery to have a high reliability and good cycle performance.

## Description

### CROSS-REFERENCE TO RELATED APPLICATION

The present application claims priority to Chinese Patent Application No. 202311628161.0, filed on November 29, 2023 and entitled "SEPARATOR, BATTERY AND ELECTRIC DEVICE", the content of which is incorporated herein by reference in its entirety.

### TECHNICAL FIELD

The present application relates to a separator, a battery, and an electric device.

### BACKGROUND

In recent years, batteries have been widely used in energy storage power systems such as hydropower, thermal power, wind power, and solar power stations, as well as in various fields such as electric tools, electric bicycles, electric motorcycles, electric vehicles, military equipment, and aerospace. With the application and promotion of batteries, their reliability, especially thermal stability, has received more and more attention. However, methods currently used for improving the thermal stability of batteries are often not conducive to balancing the energy density and service life of batteries. In addition, the continuous rise of the temperature of a battery also easily causes internal short circuits and induces thermal runaway of the battery, and even leads to safety accidents such as fire and explosion of the battery. The above statements are only used to provide background information related to the present application and do not necessarily constitute the prior art.

### SUMMARY

The present application provides a separator, a battery, and an electric device. The separator can allow the battery to have high reliability and good cycle performance.

In a first aspect, the present application provides a separator. The separator includes a porous substrate and a coating disposed on at least one surface of the porous substrate, where the coating includes a fibrous material and a particulate filler, the fibrous material includes a first fibrous material and a second fibrous material, the average length of the first fibrous material is denoted as L₁, the average length of the second fibrous material is denoted as L₂, L₁ is greater than 800 nm, and L₁/L₂ ≥ 2.4.

By allowing the fibrous material to include both the first fibrous material and the second fibrous material and allowing the average length L₁ of the first fibrous material and the average length L₂ of the second fibrous material to satisfy that L₁ is greater than 800 nm and L₁/L₂ ≥ 2.4, since the second fibrous material has a small average length, the second fibrous material can be flexibly interlaced between the first fibrous materials to play a connection role, so that the coating can be integrated and have a dendritic structure, which can reduce the content of free filler particles in the coating, reduce pore blocking, and improve the heat resistance of the separator.

In addition, by allowing the fibrous material to include both the first fibrous material and the second fibrous material and allowing the average length L₁ of the first fibrous material and the average length L₂ of the second fibrous material to satisfy that L₁ is greater than 800 nm and L₁/L₂ ≥ 2.4, when the electrolytic solution is injected, it can also quickly wet the separator along the first fibrous material and the second fibrous material, so that the separator can also have good electrolytic solution wettability and electrolytic solution retention property during fast charging and discharging of the battery, thereby facilitating ion transmission and dendrite reduction, and thus enabling the battery to have good cycle performance.

Therefore, by allowing the fibrous material to include both the first fibrous material and the second fibrous material and allowing the average length L₁ of the first fibrous material and the average length L₂ of the second fibrous material to satisfy that L₁ is greater than 800 nm and L₁/L₂ ≥ 2.4, the coating can have a dendritic structure, and the first fibrous material, the second fibrous material, and the filler particles are interwoven to form an integrated coating. Therefore, the separator provided in the embodiments of the present application can have good heat resistance, good air permeability, and good electrolytic solution wettability and electrolytic solution retention property, thereby helping to reduce the failure risk during use of the battery, and also enabling the battery to have high reliability and good cycle performance.

In some embodiments, L₁/L₂ is 2.4-9.0, optionally 2.7-5.8.

By further adjusting L₁/L₂ to be within the above range, the first fibrous material can be better interwoven with the second fibrous material. This is conducive to further increasing the heat resistance of the separator and reducing the content of free filler particles in the coating, and this also facilitates quick wetting of the separator by the electrolytic solution along the first fibrous material and the second fibrous material, so that the electrolytic solution wettability and electrolytic solution retention property of the separator are improved, thereby further enabling the battery to have higher reliability and better cycle performance.

In some embodiments, the average length L₁ of the first fibrous material is 850 nm to 3000 nm, optionally 1000 nm to 2000 nm.

In some embodiments, the average length L₂ of the second fibrous material is 200 nm to 800 nm, optionally 300 nm to 550 nm.

By further adjusting the average lengths of the first fibrous material and/or the second fibrous material to be within the above ranges, it facilitates further reducing the failure risk during use of the battery and also further improving the cycle performance of the battery.

In some embodiments, the average diameter of the first fibrous material is greater than the average diameter of the second fibrous material.

By further allowing the average diameter of the first fibrous material to be greater than the average diameter of the second fibrous material, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating further improving the heat resistance of the separator, reducing pore blocking of the separator, and improving electrolytic solution wettability and electrolytic solution retention property of the separator, so that further reduction in the failure risk during use of the battery and also further improvement in the cycle performance of the battery are facilitated.

In some embodiments, the average diameter of the first fibrous material is less than or equal to 100 nm, optionally 25 nm to 75 nm.

In some embodiments, the average diameter of the second fibrous material is 12 nm to 40 nm, optionally 15 nm to 32 nm.

By adjusting the average diameters of the first fibrous material and/or the second fibrous materials to be within the above ranges, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating improving the heat resistance of the separator, reducing pore blocking of the separator, and improving electrolytic solution wettability and electrolytic solution retention property of the separator, so that further reduction in the failure risk during use of the battery and also further improvement in the cycle performance of the battery are facilitated.

In some embodiments, the aspect ratio of the first fibrous material is greater than the aspect ratio of the second fibrous material.

By further allowing the aspect ratio of the first fibrous material to be greater than the aspect ratio of the second fibrous material, it facilitates the connection of the first fibrous material to more filler particles and better connection of the second fibrous material between the first fibrous materials to allow the first fibrous material to interweave with the second fibrous material to form a dendritic structure, and it also facilitates the interweaving of the first fibrous material, the second fibrous material, and the filler particles to form an integrated coating, so that the content of the free filler particles is reduced, thereby improving the heat resistance of the separator, reducing pore blocking of the separator, and improving the electrolytic solution wettability and electrolytic solution retention property of the separator. Therefore, by further allowing the aspect ratio of the first fibrous material to be greater than the aspect ratio of the second fibrous material, the failure risk during use of the battery can be further reduced, and the cycle performance of the battery can also be further improved.

In some embodiments, the aspect ratio of the first fibrous material is 12-100, optionally 20-50.

In some embodiments, the aspect ratio of the second fibrous material is 10-70, optionally 15-40.

By adjusting the aspect ratios of the first fibrous material and/or the second fibrous materials to be within the above ranges, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating improving the heat resistance of the separator, reducing pore blocking of the separator, and improving electrolytic solution wettability and electrolytic solution retention property of the separator, so that further reduction in the failure risk during use of the battery and also further improvement in the cycle performance of the battery are facilitated.

In some embodiments, the content of the first fibrous material is less than the content of the second fibrous material.

By adjusting the content of the first fibrous material to be less than the content of the second fibrous material, more second fibrous materials can be better connected between the first fibrous materials, which facilitates the formation of a dendritic structure with more branches by the interweaving of the first fibrous material and the second fibrous material, thereby facilitating quick wetting of the separator by the electrolytic solution along the first fibrous material and the second fibrous material, improving the electrolytic solution wettability and electrolytic solution retention property of the separator, and further improving the cycle performance of the battery.

In some embodiments, the content of the first fibrous material is denoted as W₁₁, and the content of the second fibrous material is denoted as W₁₂, both based on the total mass of the coating; W₁₁/W₁₂ is 0.20-0.95, more optionally 0.40-0.75.

By further adjusting W₁₁/W₁₂ to be within the above range, the performance of the separator and the battery can be further improved.

In some embodiments, the content of the first fibrous material is denoted as W₁₁, and W₁₁ is 5 wt% to 13 wt% based on the total mass of the coating.

In some embodiments, the content of the second fibrous material is denoted as W₁₂, and W₁₂ is 9 wt% to 21 wt% based on the total mass of the coating.

By adjusting the contents of the first fibrous material and/or the second fibrous material to be within the above ranges, the first fibrous material can be better interwoven with the second fibrous material. This is conducive to further increasing the heat resistance of the separator and reducing the content of free filler particles in the coating, and this also facilitates quick wetting of the separator by the electrolytic solution along the first fibrous material and the second fibrous material, so that the electrolytic solution wettability and electrolytic solution retention property of the separator are improved.

In some embodiments, the first fibrous material and the second fibrous material each independently include at least one of an organic fibrous material and an inorganic fibrous material.

Optionally, the organic fibrous material includes at least one of nanocellulose, polytetrafluoroethylene nanofiber, and polyamide nanofiber.

Optionally, the inorganic fibrous material includes at least one of halloysite nanotube, nanorod-shaped aluminum oxide, nanorod-shaped boehmite, nanorod-shaped silicon oxide, and glass fiber.

In some embodiments, the first fibrous material and the second fibrous material each independently include nanocellulose.

Optionally, the nanocellulose includes a modifying group, and the modifying group includes at least one of an amine group, a carboxyl group, an aldehyde group, a sulfonic acid group, and a phosphoric acid group, more optionally at least one of a sulfonic acid group and a phosphoric acid group.

Optionally, the nanocellulose includes a hydroxyl group and a modifying group, and the molar ratio of the modifying group to the hydroxyl group is 1:4 to 4:1, more optionally 2:3 to 7:3.

In some embodiments, the particulate filler includes a first filler and a second filler, and the average particle size D₁ of the first filler is less than the average particle size D₂ of the second filler.

By allowing the particulate filler to include both the first filler and the second filler and allowing the average particle size D₁ of the first filler to be less than the average particle size D₂ of the second filler, a certain space can be formed around the second filler particles in the coating, thereby improving the air permeability of the separator, facilitating the retention of the electrolytic solution after wetting, and thereby facilitating improving the electrolytic solution retention property and ion transmission property of the separator. The first filler particles can also be allowed to fill the gaps between the second filler particles, thereby reducing the thermal shrinkage of the separator and improving the heat resistance of the separator.

In some embodiments, the average particle size D₁ of the first filler and the average particle size D₂ of the second filler satisfy that D₂/D₁ ≥ 1.2; optionally, D₂/D₁ is 1.5-16, more optionally 2-8.

By further adjusting D₂/D₁ to be within the above range, the performance of the separator can be better improved, so that the separator has good air permeability, good electrolytic solution wettability and electrolytic solution retention property, and good heat resistance, and the first filler and the second filler can be better interwoven with the first fibrous material and the second fibrous material to form an integrated coating, thereby reducing the content of free filler particles, further reducing the failure risk during use of the battery, and further improving the cycle performance of the battery.

In some embodiments, the first filler has a secondary particle morphology, and the second filler has a primary particle morphology.

The secondary particle is formed by agglomerating a plurality of primary particles, and the first filler with the secondary particle morphology can better interweave with the first fibrous material and the second fibrous material to form an integrated coating, thereby helping to allow the coating to have a stable spatial network structure and improve the heat resistance of the separator. The second filler with the primary particle morphology facilitates reducing the moisture content of the coating and improving the air permeability and ion conductivity of the coating, thereby facilitating improving the cycle performance of the battery.

In some embodiments, the ratio L₁/D₂ of the average length L₁ of the first fibrous material to the average particle size D₂ of the second filler is 3.0-5.0.

By allowing L₁/D₂ to be within the above range, more second filler particles can be connected to the first fibrous material in the coating, thereby facilitating the formation of an integrated coating, and further facilitating improving the heat resistance, electrolytic solution wettability, and electrolytic solution retention property of the separator.

In some embodiments, the ratio L₂/D₁ of the average length L₂ of the second fibrous material to the average particle size D₁ of the first filler is 2.0-4.0.

By allowing L₂/D₁ to be within the above range, more second filler particles can be connected to the second fibrous material in the coating, thereby facilitating the formation of an integrated coating, and further facilitating improving the heat resistance, electrolytic solution wettability, and electrolytic solution retention property of the separator.

In some embodiments, the average particle size D₁ of the first filler is less than 200 nm, optionally 50 nm to 185 nm.

When the average particle size of the first filler is within the above range, the first fibrous material and the second fibrous material are more easily interwoven to form an integrated coating, so that the heat resistance, electrolytic solution wettability, and electrolytic solution retention property of the separator can be improved.

In some embodiments, the average particle size D₂ of the second filler is 200 nm to 800 nm, optionally 210 nm to 400 nm.

Allowing the average particle size of the second filler to be within the above range is conducive to maintaining a stable pore structure of the coating during long-term charging and discharging, reducing the moisture content of the coating, improving the air permeability and the ion conductivity of the coating, and thereby improving the cycle performance of the battery.

In some embodiments, the average particle size of the primary particles constituting the first filler is 10 nm to 50 nm, optionally 15 nm to 35 nm.

Allowing the average particle size of the primary particles constituting the first filler to be within the above range can enable the first filler to have a good secondary particle morphology, which is beneficial to improving the interweaving effect between the first filler and the first fibrous material and the second fibrous material.

In some embodiments, the specific surface area of the first filler is greater than the specific surface area of the second filler.

The first filler has a larger specific surface area and a better affinity for the first fibrous material and the second fibrous material, so that the coating can have a more stable spatial network structure, and the separator can have better heat resistance and higher ion conductivity. The second filler has a smaller specific surface area, which is conducive to reducing the moisture content of the separator.

In some embodiments, the specific surface area of the first filler is greater than or equal to 20 m²/g, optionally 30 m²/g to 80 m²/g.

Allowing the specific surface area of the first filler to be within the above range facilitates further improving the heat resistance and ion conductivity of the separator. In addition, it also facilitates improving the affinity of the first filler for the first fibrous material and the second fibrous material, so that the coating can have a more stable spatial network structure, and the separator can have better heat resistance and higher ion conductivity.

In some embodiments, the specific surface area of the second filler is less than 20 m²/g, optionally 5 m²/g to 15 m²/g.

Allowing the specific surface area of the second filler to be within the above range facilitates reducing the moisture content of the separator, thereby reducing the capacity fade rate of the battery and improving the cycle performance of the battery.

In some embodiments, the content of the first filler is greater than the content of the second filler.

Therefore, it facilitates better playing the role of the first filler and the second filler, improving the heat resistance of the separator, and also improving the electrolytic solution retention property of the separator.

In some embodiments, the content of the first filler is denoted as W₂₁, and the content of the second filler is denoted as W₂₂, both based on the total mass of the coating; W₂₂/W₂₁ is 0.10-0.80, more optionally 0.25-0.50.

In some embodiments, the content of the first filler is denoted as W₂₁, and W₂₁ is 20 wt% to 70 wt%, optionally 36 wt% to 61.5 wt%, based on the total mass of the coating.

Allowing the content of the first filler to be within the above range facilitates an appropriate viscosity of the coating slurry, thereby further facilitating the coating operation. In addition, this can allow the coating to have a more stable spatial network structure, so that the separator can have better heat resistance and higher ion conductivity.

In some embodiments, the content of the second filler is denoted as W₂₂, and W₂₂ is 5 wt% to 60 wt%, optionally 10 wt% to 35 wt%, based on the total mass of the coating.

Allowing the content of the second filler to be within the above range facilitates maintaining a stable pore structure of the coating during long-term charging and discharging, so that the moisture content of the separator can be reduced, and the retention of the electrolytic solution after wetting is also facilitated, thereby improving the cycle performance of the battery.

In some embodiments, the first filler includes at least one of an inorganic particle and an organic particle.

Optionally, the inorganic particle includes at least one of boehmite, aluminum oxide, barium sulfate, magnesium oxide, magnesium hydroxide, silicon-oxygen compound, tin dioxide, titanium oxide, calcium oxide, zinc oxide, zirconium oxide, yttrium oxide, nickel oxide, hafnium dioxide, cerium oxide, zirconium titanate, barium titanate, and magnesium fluoride. More optionally, the inorganic particle includes at least one of boehmite, aluminum oxide, barium sulfate, magnesium oxide, silicon-oxygen compound, titanium oxide, zinc oxide, cerium oxide, and barium titanate.

Optionally, the organic particle includes at least one of polystyrene and polyacrylic acid wax.

In some embodiments, the second filler includes at least one of inorganic particles having a dielectric constant of 5 or more, inorganic particles having ion conductivity but not storing ions, and inorganic particles capable of undergoing electrochemical reactions.

In some embodiments, the first filler includes inorganic particles with a secondary particle morphology, and the crystal form of the inorganic particles with the secondary particle morphology includes at least two of crystal form α, crystal form θ, crystal form γ, and crystal form η. Optionally, the crystal form of the inorganic particles with the secondary particle morphology includes at least two of the crystal form α, the crystal form θ, and the crystal form γ.

Optionally, the content of the inorganic particle with the secondary particle morphology having the crystal form α in the inorganic particles with the secondary particle morphology is greater than or equal to 1.2 wt%, more optionally 1.2 wt% to 10 wt%, based on the total mass of the inorganic particles with the secondary particle morphology.

Optionally, the content of the inorganic particle with the secondary particle morphology having the crystal form θ in the inorganic particles with the secondary particle morphology is greater than or equal to 50 wt%, more optionally 60 wt% to 85 wt%, based on the total mass of the inorganic particles with the secondary particle morphology.

Optionally, the content of the inorganic particle with the secondary particle morphology having the crystal form γ in the inorganic particles with the secondary particle morphology is greater than or equal to 10 wt%, more optionally 15 wt% to 60 wt%, based on the total mass of the inorganic particles with the secondary particle morphology.

Optionally, the content of the inorganic particle with the secondary particle morphology having the crystal form η in the inorganic particles with the secondary particle morphology is less than or equal to 5 wt%, more optionally less than or equal to 2 wt%, based on the total mass of the inorganic particles with the secondary particle morphology.

In some embodiments, the second filler includes inorganic particles with a primary particle morphology, and the crystal form of the inorganic particles with the primary particle morphology includes at least one of crystal form α and crystal form γ, optionally crystal form α.

Optionally, the content of the inorganic particle with the primary particle morphology having the crystal form α in the second filler is greater than or equal to 90 wt%, more optionally 95 wt% to 100 wt%, based on the total mass of the second filler.

In some embodiments, the coating further includes a non-particulate binder.

Optionally, the non-particulate binder includes an aqueous solution-type binder.

Optionally, the content of the non-particulate binder in the coating is less than or equal to 2 wt% based on the total mass of the coating.

In some embodiments, the separator further includes an adhesive layer disposed on at least a part of the surface of the coating.

Optionally, the adhesive layer includes a particulate binder. More optionally, the particulate binder includes at least one of acrylate monomer homopolymers or copolymers, acrylic acid monomer homopolymers or copolymers, and fluorinated olefin monomer homopolymers or copolymers.

In some embodiments, the thickness of the porous substrate is less than or equal to 5 µm, optionally 3 µm to 4.5 µm.

In some embodiments, the thickness of the coating is less than or equal to 3 µm, optionally 0.3 µm to 2 µm.

In some embodiments, the transverse direction thermal shrinkage and the machine direction thermal shrinkage of the separator at 150 °C for 1 h are both less than 2%.

In some embodiments, the air permeability of the separator is less than or equal to 300 s/100 mL, optionally 100 s/100 mL to 240 s/100 mL.

In some embodiments, the wetting speed of the separator is greater than or equal to 3 mm/s, optionally 5 mm/s to 15 mm/s.

In a second aspect, the present application provides a battery, which includes the separator according to the first aspect of the present application.

In a third aspect, the present application provides an electric device, which includes the battery according to the second aspect of the present application.

The electric device of the present application includes the battery provided by the present application and thus has at least the same advantages as the battery.

### BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic view of a battery cell according to some embodiments of the present application.
FIG. 2 is a schematic exploded view of a battery cell according to some embodiments of the present application.
FIG. 3 is a schematic view of a battery module according to some embodiments of the present application.
FIG. 4 is a schematic view of a battery pack according to some embodiments of the present application.
FIG. 5 is a schematic exploded view of the battery pack shown in FIG. 4.
FIG. 6 is a schematic view of an electric device according to some embodiments of the present application.

The drawings are not necessarily drawn to scale. The reference numerals are illustrated as follows: 1: battery pack; 2: upper case body; 3: lower case body; 4: battery module; 5: battery cell; 51: shell body; 52: electrode assembly; 53: cover plate.

### DETAILED DESCRIPTION

Hereinafter, embodiments of the separator, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, in the present application, the terms "first", "second", and the like are used to distinguish different objects and are not intended to describe a specific order or priority.

In the present application, the terms "a plurality of" and "multiple" mean two or more.

In the description of the embodiments of the present application, unless otherwise specified, a first feature being "above" or "below" a second feature may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or may simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

Unless otherwise specified, the terms used in the present application have well-known meanings that are commonly understood by those skilled in the art.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

The battery mentioned in the embodiments of the present application may be a single physical module that includes one or a plurality of battery cells to provide a higher voltage and capacity. For example, the battery mentioned in the present application may include a battery cell, a battery module, a battery pack, or the like.

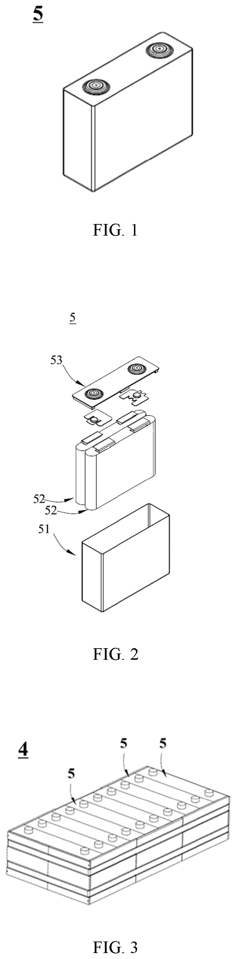

A battery cell is the smallest unit forming a battery and can independently realize the functions of charging and discharging. The battery cell may be cylindrical, rectangular parallelepiped-shaped, or in other shapes, which is not limited in the embodiments of the present application. FIG. 1 shows a battery cell 5 having a rectangular parallelepiped structure as one example.

When there are a plurality of battery cells, the plurality of battery cells are connected in series, in parallel, or in series-parallel by a busbar component. In some embodiments, the battery may be a battery module, and when there are a plurality of battery cells, the plurality of battery cells are arranged and fixed to form one battery module. In some embodiments, the battery may be a battery pack. The battery pack includes a case and a battery cell, and the battery cell or the battery module is accommodated in the case. In some embodiments, the case may be a part of the chassis structure of the vehicle. For example, a part of the case may become at least a part of the bottom plate of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

The battery cell generally includes an electrode assembly and an electrolyte. The electrode assembly may be a winding structure or a stacking structure, which is not limited in the embodiments of the present application.

The battery cell may also include an outer packaging, which may be configured for packaging the electrode assembly and electrolyte. The outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

In some embodiments, as shown in FIG. 2, the outer packaging may include a shell body 51 and a cover plate 53. The shell body 51 may include a bottom plate and side plates connected to the bottom plate, and the bottom plate and the side plates define, in an enclosing manner, an accommodating cavity. The shell body 51 is provided with an opening communicating with the accommodating cavity, and the cover plate 53 is configured for lidding the opening to close the accommodating cavity. The electrode assembly 52 is packaged in the accommodating cavity. The number of electrode assemblies 52 included in the battery cell 5 may be one or more and may be adjusted as needed.

In some embodiments, the battery cells may be assembled into a battery module. The number of battery cells included in the battery module may be more than one, and the specific number may be adjusted based on the application and capacity of the battery module. FIG. 3 is a schematic view of a battery module 4 as one example. As shown in FIG. 3, in the battery module 4, a plurality of battery cells 5 may be sequentially arranged in a length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

In some embodiments, the above battery module may further be assembled into a battery pack; the number of the battery modules included in the battery pack may be adjusted based on the application and capacity of the battery pack.

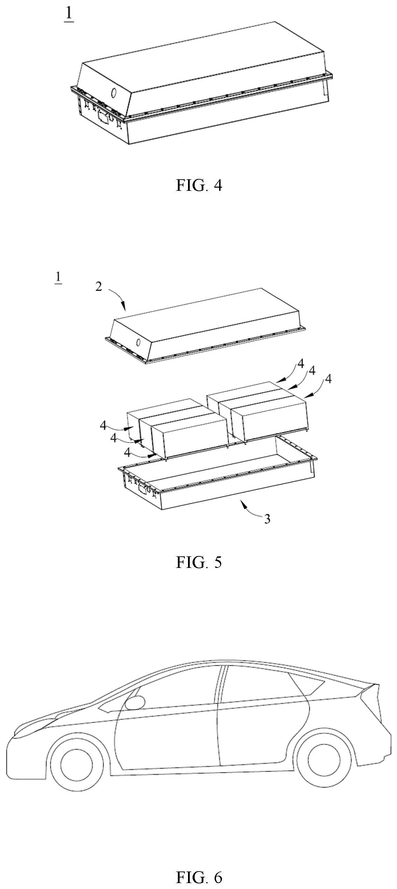

FIGs. 4 and 5 are schematic views of a battery pack 1 as one example. As shown in FIG. 4 and FIG. 5, the battery pack 1 may include a case and a plurality of battery modules 4 disposed in the case. The case includes an upper case body 2 and a lower case body 3. The upper case body 2 is configured for lidding the lower case body 3 to form a closed space for accommodating the battery modules 4. The plurality of battery modules 4 may be arranged in any manner in the case.

The battery provided in the embodiments of the present application may include, but is not limited to, a lithium battery and a sodium battery, such as a lithium-ion battery and a sodium-ion battery.

Generally, the electrode assembly includes a positive electrode plate, a negative electrode plate, and a separator. The separator is disposed between the positive electrode plate and the negative electrode plate, primarily serving to prevent short circuits between the positive electrode and the negative electrode while allowing ions to pass through freely to form a circuit.

The separator used in the current commercial battery is usually a polyolefin porous film, which has poor heat resistance. When heated, it will undergo significant thermal shrinkage effect, so that the positive electrode and the negative electrode inside the battery are in direct contact to cause internal short circuits. This easily induces thermal runaway, and in severe cases, the battery will also have safety accidents such as fire and explosion.

In order to solve the above problems, the current measures are mainly to apply a heat-resistant inorganic ceramic layer on a polyolefin porous film, which can increase the mechanical strength of the separator, reduce the degree of shrinkage of the separator when heated, and reduce the risk of short circuits between the positive electrode and the negative electrode inside the battery. However, the commercially available inorganic ceramic particles have a large particle size. This increases the overall thickness of the separator, resulting in an inability to balance the energy density of the battery. Especially in the field of power batteries, this is not conducive to the improvement of driving range.

Embodiments of the present application provide a separator.

The separator includes a porous substrate and a coating disposed on at least one surface of the porous substrate. The coating includes a fibrous material and a particulate filler, the fibrous material includes a first fibrous material and a second fibrous material, the average length of the first fibrous material is denoted as L₁, the average length of the second fibrous material is denoted as L₂, L₁ is greater than 800 nm, and L₁/L₂ ≥ 2.4.

The term "fibrous material" refers to a material having an aspect ratio of 5 or more.

The first fibrous material and the second fibrous material have a linear structure, the average length L₁ of the first fibrous material is greater than 800 nm, and the first fibrous material has a larger average length, thus allowing it to connect more filler particles. However, as the interweaving effect between the first fibrous materials is usually poor and the first fibrous material is more likely to be in contact with the filler particles with a larger size, part of the filler particles with a smaller size may be in a free state, thereby easily causing pore blocking and also easily reducing the heat resistance of the separator. By allowing the fibrous material to include both the first fibrous material and the second fibrous material and allowing the average length L₁ of the first fibrous material and the average length L₂ of the second fibrous material to satisfy that L₁ is greater than 800 nm and L₁/L₂ ≥ 2.4, since the second fibrous material has a small average length, the second fibrous material can be flexibly interlaced between the first fibrous materials to play a connection role, so that the coating can be integrated and have a dendritic structure, which can reduce the content of free filler particles in the coating, reduce pore blocking, and improve the heat resistance of the separator. In addition, compared with the inorganic ceramic coating, the coating of the separator provided in the embodiments of the present application can have both a low thickness and a high heat resistance.

In addition, by allowing the fibrous material to include both the first fibrous material and the second fibrous material and allowing the average length L₁ of the first fibrous material and the average length L₂ of the second fibrous material to satisfy that L₁ is greater than 800 nm and L₁/L₂ ≥ 2.4, when the electrolytic solution is injected, it can also quickly wet the separator along the first fibrous material and the second fibrous material, so that the separator can also have good electrolytic solution wettability and electrolytic solution retention property during fast charging and discharging of the battery, thereby facilitating ion transmission and dendrite reduction, and thus enabling the battery to have good cycle performance.

Therefore, by allowing the fibrous material to include both the first fibrous material and the second fibrous material and allowing the average length L₁ of the first fibrous material and the average length L₂ of the second fibrous material to satisfy that L₁ is greater than 800 nm and L₁/L₂ ≥ 2.4, the coating can have a dendritic structure, and the first fibrous material, the second fibrous material, and the filler particles are interwoven to form an integrated coating. Therefore, the separator provided in the embodiments of the present application can have good heat resistance, good air permeability, and good electrolytic solution wettability and electrolytic solution retention property, thereby helping to reduce the failure risk during use of the battery, and also enabling the battery to have high reliability and good cycle performance.

In addition, the separator provided by the embodiments of the present application has good heat resistance, so that the separator is thin while having high heat resistance, and thus the battery is further allowed to have high energy density. Meanwhile, the separator provided by the embodiments of the present application can also reduce the probability of misalignment and short-circuiting between the edges of the positive electrode and the negative electrode in the battery fabrication process, thereby reducing the failure risk in the battery fabrication process while reducing the failure risk during use of the battery, and improving the production yield of the battery product.

In some embodiments, the average length L₁ of the first fibrous material and the average length L₂ of the second fibrous material may satisfy that L₁/L₂ is 2.4-9.0. For example, it may be 2.4, 2.7, 3.0, 3.2, 3.4, 3.6, 3.8, 4.0, 4.2, 4.4, 4.6, 4.8, 5.0, 5.2, 5.4, 5.6, 5.8, 6.0, 6.3, 6.6, 6.9, 7.2, 7.5, 7.8, 8.2, 8.6, 9.0, or a range composed of any of the above values.

Optionally, L₁/L₂ may be 2.7-5.8 or 3.0-5.0.

By further adjusting L₁/L₂ to be within the above range, the first fibrous material can be better interwoven with the second fibrous material. This is conducive to further increasing the heat resistance of the separator and reducing the content of free filler particles in the coating, and this also facilitates quick wetting of the separator by the electrolytic solution along the first fibrous material and the second fibrous material, so that the electrolytic solution wettability and electrolytic solution retention property of the separator are improved, thereby further enabling the battery to have higher reliability and better cycle performance.

In some embodiments, the average length L₁ of the first fibrous material may be 850 nm to 3000 nm, optionally 1000 nm to 2000 nm.

By adjusting the average length of the first fibrous material to be within the above range, the same mass of the first fibrous material can connect more filler particles.

In some embodiments, the average length L₂ of the second fibrous material may be 200 nm to 800 nm, optionally 300 nm to 550 nm.

By adjusting the average length of the second fibrous material to be within the above range, it facilitates better connection of the second fibrous material to the first fibrous material.

By adjusting the average lengths of the first fibrous material and/or the second fibrous material to be within the above ranges, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating improving the heat resistance of the separator and reducing pore blocking of the separator. By adjusting the average lengths of the first fibrous material and/or the second fibrous material to be within the above ranges, it also facilitates quick wetting of the separator by the electrolytic solution along the first fibrous material and the second fibrous material, so that the electrolytic solution wettability and electrolytic solution retention property of the separator are improved, thereby facilitating ion transmission and dendrite reduction. By adjusting the average lengths of the first fibrous material and/or the second fibrous material to be within the above ranges, it also facilitates an appropriate viscosity of the coating slurry, thereby facilitating the coating operation and also the improvement in the uniformity and consistency of the coating.

Therefore, by further adjusting the average lengths of the first fibrous material and/or the second fibrous material to be within the above ranges, it facilitates further reducing the failure risk during use of the battery and also further improving the cycle performance of the battery.

In some embodiments, the average diameter of the first fibrous material may be greater than the average diameter of the second fibrous material.

When the average length of the second fibrous material is small and the average diameter of the second fibrous material is large, the connection between the first fibrous materials by the second fibrous material deteriorates under the same mass, which is not conducive to the interweaving with the first fibrous material to form a dendritic structure.

By further allowing the average diameter of the first fibrous material to be greater than the average diameter of the second fibrous material, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating further improving the heat resistance of the separator, reducing pore blocking of the separator, and improving electrolytic solution wettability and electrolytic solution retention property of the separator, so that further reduction in the failure risk during use of the battery and also further improvement in the cycle performance of the battery are facilitated.

In some embodiments, the average diameter of the first fibrous material may be less than or equal to 100 nm, optionally 25 nm to 75 nm.

In some embodiments, the average diameter of the second fibrous material may be 12 nm to 40 nm, optionally 15 nm to 32 nm.

By adjusting the average diameters of the first fibrous material and/or the second fibrous materials to be within the above ranges, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating improving the heat resistance of the separator, reducing pore blocking of the separator, and improving electrolytic solution wettability and electrolytic solution retention property of the separator, so that further reduction in the failure risk during use of the battery and also further improvement in the cycle performance of the battery are facilitated.

In some embodiments, the aspect ratio of the first fibrous material may be greater than the aspect ratio of the second fibrous material.

By further allowing the aspect ratio of the first fibrous material to be greater than the aspect ratio of the second fibrous material, it facilitates the connection of the first fibrous material to more filler particles and better connection of the second fibrous material between the first fibrous materials to allow the first fibrous material to interweave with the second fibrous material to form a dendritic structure, and it also facilitates the interweaving of the first fibrous material, the second fibrous material, and the filler particles to form an integrated coating, so that the content of the free filler particles is reduced, thereby improving the heat resistance of the separator, reducing pore blocking of the separator, and improving the electrolytic solution wettability and electrolytic solution retention property of the separator. Therefore, by further allowing the aspect ratio of the first fibrous material to be greater than the aspect ratio of the second fibrous material, the failure risk during use of the battery can be further reduced, and the cycle performance of the battery can also be further improved.

In some embodiments, the aspect ratio of the first fibrous material may be 12-100, optionally 20-50.

In some embodiments, the aspect ratio of the second fibrous material may be 10-70, optionally 15-40.

By adjusting the aspect ratios of the first fibrous material and/or the second fibrous materials to be within the above ranges, it facilitates the interweaving of the first fibrous material and the second fibrous material to form a dendritic structure, and it also facilitates the interweaving of the first fibrous material, the second fibrous material, and the filler particles to form an integrated coating, so that the content of the free filler particles is reduced, thereby facilitating improving the heat resistance of the separator, reducing pore blocking of the separator, and improving electrolytic solution wettability and electrolytic solution retention property of the separator, so that further reduction in the failure risk during use of the battery and also further improvement in the cycle performance of the battery are facilitated.

The average lengths and the average diameters of the first fibrous material and the second fibrous material may be determined by the following method: A 3.6 mm × 3.6 mm sample is cut from any region of the separator, and the microscopic morphology and structure of the coating are characterized using a scanning electron microscope (e.g., ZEISS Sigma 300) under high vacuum mode with an operating voltage of 3 kV and a magnification of 30,000× to obtain an SEM image; based on the acquired SEM image, multiple test areas (e.g., 5 or more, each having a dimension of 0.5 µm × 0.5 µm) are selected for length measurement, and then the average value of the lengths of the first fibrous material obtained from all the test areas is taken as the average length of the first fibrous material, and the average value of the lengths of the second fibrous material obtained from all the test areas is taken as the average length of the second fibrous material; based on the acquired SEM image, multiple test areas (e.g., 5 or more, each having a dimension of 0.5 µm × 0.5 µm) are selected for diameter measurement using the Nano Measurer particle size distribution analysis software, and then the average value of the diameters of the first fibrous material obtained from all the test areas is taken as the average diameter of the first fibrous material, and the average value of the diameters of the second fibrous material obtained from all the test areas is taken as the average diameter of the second fibrous material.

In some embodiments, the first fibrous material and the second fibrous material may each independently include at least one of an organic fibrous material and an inorganic fibrous material.

Optionally, the organic fibrous material may include at least one of nanocellulose, polytetrafluoroethylene nanofiber, and polyamide nanofiber.

Optionally, the inorganic fibrous material may include at least one of halloysite nanotube, nanorod-shaped aluminum oxide, nanorod-shaped boehmite, nanorod-shaped silicon oxide, and glass fiber.

In some embodiments, the first fibrous material and the second fibrous material may each independently include nanocellulose.

The nanocellulose is a general term for cellulose with any dimension at the nanoscale (e.g., within 100 nm). It combines both the characteristics of cellulose and nanoparticles. The nanocellulose may be a polymer nanomaterial extracted from wood, cotton, etc., in nature by one or more means of chemistry, physics, biology, etc., and has the advantages of wide source, low costs, biodegradability, high modulus, high specific surface area, etc. Therefore, it is an excellent substitute for traditional petrochemical resources, and can effectively alleviate environmental pollution and the shortage of petrochemical resources.

The nanocellulose also has good high-temperature resistance, and its volume change after heating is small, so that the heat resistance of the separator can be improved. The density of the nanocellulose is small, so that the mass of the battery can also be reduced, and the mass energy density of the battery can be improved. The nanocellulose itself contains a large number of hydroxyl groups and can be connected to the filler particles, the porous substrate, etc., through hydrogen bonds, van der Waals force, and other acting forces, so that the adhesion between coatings and between the coating and the porous substrate can also be enhanced, thereby reducing powder shedding. In addition, the structure formed by the interweaving of the nanocellulose and the filler particles may have minute nanopores, so that current leakage can be reduced, and the separator can have both electrolytic solution wettability and electrolytic solution retention property and good voltage breakdown resistance.

Optionally, the nanocellulose includes a modifying group, and the modifying group may include at least one of an amine group, a carboxyl group, an aldehyde group, a sulfonic acid group and a phosphoric acid group, more optionally at least one of a sulfonic acid group and a phosphoric acid group.

When the nanocellulose has the above specific modifying group, in one aspect, the heat resistance of the separator can be effectively improved, the thermal stability of the battery can be improved, and the failure risk during use of the battery can be reduced, and in another aspect, the bonding strength between the coating and the porous substrate can also be enhanced.

When the nanocellulose has the above specific modifying group, the interweaving of the nanocellulose and the filler particles to form an integrated coating is facilitated, so that the coating can have a stable spatial network structure, thereby helping to improve the electrolytic solution wettability and electrolytic solution retention property of the separator and enhance the ion transmission property and the voltage breakdown resistance of the separator; the compatibility with a high-voltage positive electrode active material is also facilitated, thereby further improving the energy density of the battery. In addition, the presence of the modifying group can also reduce the proportion of the hydroxyl group. This can allow the coating slurry to have an appropriate viscosity and thereby facilitate the coating operation, so that the production efficiency of the separator can be improved, and the uniformity and consistency of the coating can also be enhanced.

Optionally, the nanocellulose includes a hydroxyl group and a modifying group, and the molar ratio of the modifying group to the hydroxyl group may be 1:4 to 4:1, more optionally 2:3 to 7:3.

When the molar ratio of the modifying group to the hydroxyl group is within the above range, the heat resistance, ion transmission property, electrolytic solution wettability, and electrolytic solution retention property of the separator can be further improved, thereby helping to reduce the failure risk during use of the battery and improve the cycle performance of the battery as well.

The type of the modifying group in the nanocellulose may be determined by infrared spectroscopy. For example, the infrared spectrum of the material may be tested to determine the characteristic peaks it contains, and thus the type of the modifying group is determined. Specifically, the material may be analyzed by infrared spectroscopy with instruments and methods known in the art, for example, by using an infrared spectrometer (such as an IS10 Fourier transform infrared spectrometer of Nicolet, USA) according to general rules for infrared analysis in GB/T 6040-2019.

The molar ratio of the modifying group to the surface hydroxyl group in the nanocellulose can be measured by the following method: According to the phthalic anhydride method in GB/T 12008.3-2009, the hydroxyl values (the amount of potassium hydroxide in milligrams that is equivalent to the hydroxyl group content per gram of the sample) of the raw material cellulose and the nanocellulose are obtained, and the obtained numerical values are expressed in mg KOH/g, which is converted into mmol/g as the hydroxyl group content. The content of the modifying group (i.e., the content of the modified hydroxyl group) can be obtained by subtracting the hydroxyl group content of the nanocellulose from the hydroxyl group content of the raw material cellulose, thereby calculating the molar ratio of the modifying group to the surface hydroxyl group.

In some embodiments, the nanocellulose may be obtained by the following method: A cellulose powder with a whiteness greater than or equal to 80% is provided; the obtained cellulose powder is mixed and reacted with a modification solution, and then washing for impurity removal is performed; the pH is adjusted to be neutral, and then grinding and cutting were performed to obtain the nanocellulose.

Optionally, the cellulose powder with a whiteness greater than or equal to 80% may be commercially available, or may be obtained by a chemical method (for example, acidolysis, alkali treatment, or Tempo catalytic oxidation), a biological method (for example, enzyme treatment), a mechanical method (for example, ultrafine grinding, ultrasonic crushing, or high-pressure homogenization), or the like. The fiber raw material for preparing the above cellulose powder with a whiteness greater than or equal to 80% may include plant fibers, such as at least one of fibers from plants of the genus Gossypium (e.g., a cotton fiber or a kapok fiber), fibers from bast plants (e.g., a sisal fiber, a ramie fiber, a jute fiber, a flax fiber, a hemp fiber, or an abaca fibers), palm fibers, wood fibers, bamboo fibers, and grass fibers.

In some embodiments, the above cellulose powder with a whiteness greater than or equal to 80% may also be prepared in the following manner: A fiber raw material is subjected to opening and cleaning, and then cooked with an alkaline solution (for example, an aqueous NaOH solution having a concentration of 4 wt% to 20 wt%, optionally 5 wt% to 15 wt%), and then water washing for impurity removal (for example, performing water washing for 3-6 times), bleaching (for example, using sodium hypochlorite and/or hydrogen peroxide), acid washing for impurity removal, water washing for impurity removal, dewatering, and airflow drying are performed in sequence to obtain the cellulose powder.

In some embodiments, the modification solution may be an acid solution (e.g., an aqueous sulfuric acid solution, an aqueous phosphoric acid solution, or an aqueous acetic acid solution) or an alkaline solution (e.g., an organic solvent solution of urea). Optionally, the modification solution is an acid solution.

Optionally, the concentration of the acid solution may be 5 wt% to 80 wt%. When an aqueous sulfuric acid solution is used as the modification solution, the concentration of the acid solution may be 40 wt% to 80 wt%, and thus the cellulose powder having a sulfonic acid group may be obtained. When an aqueous phosphoric acid solution is used as the modification solution, the concentration of the acid solution may be 45 wt% to 75 wt%, and thus the cellulose powder having a phosphoric acid group may be obtained. When an aqueous acetic acid solution is used as the modification solution, the concentration of the acid solution may be 40 wt% to 80 wt%, and thus the cellulose powder having a carboxylic acid group may be obtained.

Optionally, the organic solvent solution of urea may be a solution of urea in xylene, and thus the cellulose powder having an amine group may be obtained.

In some embodiments, optionally, the mass ratio of the cellulose powder to the modification solution may be 1:2.5 to 1:50, optionally 1:5 to 1:30.

When an aqueous sulfuric acid solution is used as the modification solution, the mass ratio of the cellulose powder to the acid solution may be 1:5 to 1:30. When an aqueous phosphoric acid solution is used as the modification solution, the mass ratio of the cellulose powder to the acid solution may be 1:5 to 1:30. When an aqueous acetic acid solution is used as the modification solution, the mass ratio of the cellulose powder to the acid solution may be 1:5 to 1:30. When an organic solvent solution of urea is used as the modification solution, the mass ratio of the cellulose powder to the organic solvent solution of urea may be 1:4 to 1:40.

In some embodiments, when the modification solution is an acid solution, the reaction may be performed at a temperature of not higher than 80 °C, optionally at 30 °C to 60 °C, and the reaction time for the cellulose powder and the modification solution may be 0.25 h to 4 h, optionally 0.5 h to 3 h.

In some embodiments, when the modification solution is an alkaline solution, the reaction may be performed at 100 °C to 145 °C, and the reaction time for the cellulose powder and the modification solution may be 0.5 h to 5 h.

In some embodiments, grinding may be performed by using a grinder, and cutting may be performed by using a high-pressure homogenizer. Nanocellulose with different average diameters and/or different average lengths can be obtained by adjusting the grinding parameters of the grinder (e.g., number of grindings or grinding time) as well as the cutting parameters of the high-pressure homogenizer.

In some embodiments, the content of the first fibrous material may be less than the content of the second fibrous material.

By adjusting the content of the first fibrous material to be less than the content of the second fibrous material, more second fibrous materials can be better connected between the first fibrous materials, which facilitates the formation of a dendritic structure with more branches by the interweaving of the first fibrous material and the second fibrous material, thereby facilitating quick wetting of the separator by the electrolytic solution along the first fibrous material and the second fibrous material, improving the electrolytic solution wettability and electrolytic solution retention property of the separator, and further improving the cycle performance of the battery.

Optionally, the content of the first fibrous material is denoted as W₁₁, and the content of the second fibrous material is denoted as W₁₂, both based on the total mass of the coating; W₁₁/W₁₂ may be 0.20-0.95, optionally 0.40-0.75.

By further adjusting W₁₁/W₁₂ to be within the above range, the performance of the separator and the battery can be further improved.

In some embodiments, the content of the first fibrous material is denoted as W₁₁, and W₁₁ may be 5 wt% to 13 wt% based on the total mass of the coating.

In some embodiments, the content of the second fibrous material is denoted as W₁₂, and W₁₂ may be 9 wt% to 21 wt% based on the total mass of the coating.

By adjusting the contents of the first fibrous material and/or the second fibrous material to be within the above ranges, the first fibrous material can be better interwoven with the second fibrous material. This is conducive to further increasing the heat resistance of the separator and reducing the content of free filler particles in the coating, and this also facilitates quick wetting of the separator by the electrolytic solution along the first fibrous material and the second fibrous material, so that the electrolytic solution wettability and electrolytic solution retention property of the separator are improved.

In some embodiments, the particulate filler may include a first filler and a second filler, and the average particle size D₁ of the first filler may be less than the average particle size D₂ of the second filler.

The particle size of the first filler is small, and the gap between particles after accumulation is usually small, thereby facilitating formation of a capillary-like function, so that the wetting speed of the separator towards the electrolytic solution can be improved. However, the separator is not sufficiently excellent in air permeability, electrolytic solution retention capability, and ion transmission capability, thereby easily causing problems such as an increase in internal resistance of the battery and an increase in self-generated heat during use of the battery. By allowing the particulate filler to include both the first filler and the second filler and allowing the average particle size D₁ of the first filler to be less than the average particle size D₂ of the second filler, a certain space can be formed around the second filler particles in the coating, thereby improving the air permeability of the separator, facilitating the retention of the electrolytic solution after wetting, and thereby facilitating improving the electrolytic solution retention property and ion transmission property of the separator.

The particle size of the second filler is large, and the gap between particles after accumulation is usually large. When the battery is abnormally heated, the second filler particles are in contact with each other with the shrinkage of the porous substrate, resulting in insufficiently excellent heat resistance of the separator. By allowing the particulate filler to include both the first filler and the second filler and allowing the average particle size D₁ of the first filler to be less than the average particle size D₂ of the second filler, the first filler particles can fill the gaps between the second filler particles, thereby reducing the thermal shrinkage of the separator and improving the heat resistance of the separator.

Optionally, the average particle size D₁ of the first filler and the average particle size D₂ of the second filler satisfy that D₂/D₁ ≥ 1.2.

Optionally, D₂/D₁ may be 1.5-16, more optionally 2-8.

By further adjusting D₂/D₁ to be within the above range, the performance of the separator can be better improved, so that the separator has good air permeability, good electrolytic solution wettability and electrolytic solution retention property, and good heat resistance, and the first filler and the second filler can be better interwoven with the first fibrous material and the second fibrous material to form an integrated coating, thereby reducing the content of free filler particles, further reducing the failure risk during use of the battery, and further improving the cycle performance of the battery.

In some embodiments, the first filler has a secondary particle morphology, and the second filler has a primary particle morphology.

The secondary particle is formed by agglomerating a plurality of primary particles, and the first filler with the secondary particle morphology can better interweave with the first fibrous material and the second fibrous material to form an integrated coating, thereby helping to allow the coating to have a stable spatial network structure and improve the heat resistance of the separator. The second filler with the primary particle morphology facilitates reducing the moisture content of the coating and improving the air permeability and ion conductivity of the coating, thereby facilitating improving the cycle performance of the battery.

In some embodiments, the ratio L₁/D₂ of the average length L₁ of the first fibrous material to the average particle size D₂ of the second filler may be 3.0-5.0.

The first fibrous material is mainly used for connecting a second filler with a large particle size, and may also be used for connecting a first filler with a small particle size. By allowing L₁/D₂ to be within the above range, more second filler particles can be connected to the first fibrous material in the coating, thereby facilitating the formation of an integrated coating, and further facilitating improving the heat resistance, electrolytic solution wettability, and electrolytic solution retention property of the separator.

In some embodiments, the ratio L₂/D₁ of the average length L₂ of the second fibrous material to the average particle size D₁ of the first filler may be 2.0-4.0.

The second fibrous material is used for connecting a first filler with a small particle size. By allowing L₂/D₁ to be within the above range, more second filler particles can be connected to the second fibrous material in the coating, thereby facilitating the formation of an integrated coating, and further facilitating improving the heat resistance, electrolytic solution wettability, and electrolytic solution retention property of the separator.

In some embodiments, the average particle size D1 of the first filler may be less than 200 nm, optionally 50 nm to 185 nm.

When the average particle size of the first filler is within the above range, the first fibrous material and the second fibrous material are more easily interwoven to form an integrated coating, so that the heat resistance, electrolytic solution wettability, and electrolytic solution retention property of the separator can be improved.

In some embodiments, the average particle size D2 of the second filler may be 200 nm to 800 nm, optionally 210 nm to 400 nm.

Allowing the average particle size of the second filler to be within the above range is conducive to maintaining a stable pore structure of the coating during long-term charging and discharging, reducing the moisture content of the coating, improving the air permeability and the ion conductivity of the coating, and thereby improving the cycle performance of the battery.

The average particle sizes of the first filler and the second filler can be tested using devices and methods known in the art. For example, a scanning electron microscope (e.g., ZEISS Sigma 300) may be used to characterize the microscopic morphology and structure of the porous coating in the sample. Referring to JY/T 0584-2020, a scanning electron microscope (SEM) image of the porous coating of the separator is acquired, and the lengths of the longest diagonals of the particles are measured based on the SEM image and then the average value is taken, where the number of the selected particles may be 100 or more.

In some embodiments, the average particle size of the primary particles constituting the first filler may be 10 nm to 50 nm, optionally 15 nm to 35 nm.

Allowing the average particle size of the primary particles constituting the first filler to be within the above range can enable the first filler to have a good secondary particle morphology, which is beneficial to improving the interweaving effect between the first filler and the first fibrous material and the second fibrous material.

In some embodiments, the specific surface area of the first filler may be greater than the specific surface area of the second filler.

The first filler has a larger specific surface area and a better affinity for the first fibrous material and the second fibrous material, so that the coating can have a more stable spatial network structure, and the separator can have better heat resistance and higher ion conductivity. The second filler has a smaller specific surface area, which is conducive to reducing the moisture content of the separator.

In some embodiments, the specific surface area of the first filler may be greater than or equal to 20 m²/g, optionally 30 m²/g to 80 m²/g.

Allowing the specific surface area of the first filler to be within the above range facilitates further improving the heat resistance and ion conductivity of the separator. In addition, it also facilitates improving the affinity of the first filler for the first fibrous material and the second fibrous material, so that the coating can have a more stable spatial network structure, and the separator can have better heat resistance and higher ion conductivity.

In some embodiments, the specific surface area of the second filler may be less than 20 m²/g, optionally 5 m²/g to 15 m²/g.

Allowing the specific surface area of the second filler to be within the above range facilitates reducing the moisture content of the separator, thereby reducing the capacity fade rate of the battery and improving the cycle performance of the battery.

The specific surface areas of the first filler and the second filler have meanings well known in the art and may be determined using instruments and methods known in the art. For example, the testing may be performed with reference to GB/T 19587-2017, using the nitrogen adsorption specific surface area analysis method, with results calculated via the BET (Brunauer Emmett Teller) method. Optionally, the nitrogen adsorption specific surface area analysis test may be performed by a Tri-Star 3020 specific surface area pore size analysis tester from Micromeritics, USA.

In some embodiments, the content of the first filler may be greater than the content of the second filler. Therefore, it facilitates better playing the role of the first filler and the second filler, improving the heat resistance of the separator, and also improving the electrolytic solution retention property of the separator.

Optionally, the content of the first filler is denoted as W₂₁, and the content of the second filler is denoted as W₂₂, both based on the total mass of the coating; W₂₂/W₂₁ may be 0.10-0.80, optionally 0.25-0.50.

In some embodiments, the content of the first filler is denoted as W₂₁, and W₂₁ may be 20 wt% to 70 wt%, optionally 36 wt% to 61.5 wt%, based on the total mass of the coating.

Allowing the content of the first filler to be within the above range facilitates an appropriate viscosity of the coating slurry, thereby further facilitating the coating operation. In addition, this can allow the coating to have a more stable spatial network structure, so that the separator can have better heat resistance and higher ion conductivity.

In some embodiments, the content of the second filler is denoted as W₂₂, and W₂₂ may be 5 wt% to 60 wt%, optionally 10 wt% to 35 wt%, based on the total mass of the coating.

Allowing the content of the second filler to be within the above range facilitates maintaining a stable pore structure of the coating during long-term charging and discharging, so that the moisture content of the separator can be reduced, and the retention of the electrolytic solution after wetting is also facilitated, thereby improving the cycle performance of the battery.

In some embodiments, the total content W₁ of the fibrous material may be 14 wt% to 35 wt%, optionally 15 wt% to 30 wt%, based on the total mass of the coating. W₁ = W₁₁ + W₁₂.

In some embodiments, the total content W₂ of the particulate filler may be greater than or equal to 60 wt%, optionally 68 wt% to 83 wt%, based on the total mass of the coating. W₂ = W₂₁ + W₂₂.

By adjusting the total content of the fibrous material and the total content of the particulate filler to be within the above ranges, the coating slurry can have an appropriate viscosity, thereby further facilitating the coating operation. In addition, this also facilitates the interweaving of the first fibrous material and the second fibrous material with the first filler and the second filler to form an integrated coating, so that the coating can have a more stable spatial network structure, thereby further improving the heat resistance, air permeability, electrolytic solution wettability, and electrolytic solution retention property of the separator.

In some embodiments, the first filler may include at least one of an inorganic particle and an organic particle.

Optionally, the inorganic particle may include at least one of boehmite, aluminum oxide, barium sulfate, magnesium oxide, magnesium hydroxide, silicon-oxygen compound, tin dioxide, titanium oxide, calcium oxide, zinc oxide, zirconium oxide, yttrium oxide, nickel oxide, hafnium dioxide, cerium oxide, zirconium titanate, barium titanate, and magnesium fluoride. More optionally, the inorganic particle includes at least one of boehmite, aluminum oxide, barium sulfate, magnesium oxide, silicon-oxygen compound, titanium oxide, zinc oxide, cerium oxide, and barium titanate.

Optionally, the organic particle may include at least one of polystyrene and polyacrylic acid wax.

In some embodiments, the first filler includes inorganic particles with a secondary particle morphology, and the crystal form of the inorganic particles with the secondary particle morphology may include at least two of crystal form α, crystal form θ, crystal form γ, and crystal form η. Optionally, the crystal form of the inorganic particles with the secondary particle morphology may include at least two of the crystal form α, the crystal form θ, and the crystal form γ.

Optionally, the content of the inorganic particle with the secondary particle morphology having the crystal form α in the inorganic particles with the secondary particle morphology may be greater than or equal to 1.2 wt%, more optionally 1.2 wt% to 10 wt%, based on the total mass of the inorganic particles with the secondary particle morphology.

Optionally, the content of the inorganic particle with the secondary particle morphology having the crystal form θ in the inorganic particles with the secondary particle morphology may be greater than or equal to 50 wt%, more optionally 60 wt% to 85 wt%, based on the total mass of the inorganic particles with the secondary particle morphology.

Optionally, the content of the inorganic particle with the secondary particle morphology having the crystal form γ in the inorganic particles with the secondary particle morphology may be greater than or equal to 10 wt%, more optionally 15 wt% to 60 wt%, based on the total mass of the inorganic particles with the secondary particle morphology.

Optionally, the content of the inorganic particle with the secondary particle morphology having the crystal form η in the inorganic particles with the secondary particle morphology may be less than or equal to 5 wt%, more optionally less than or equal to 2 wt%, based on the total mass of the inorganic particles with the secondary particle morphology.

The inorganic particle having the crystal form θ has a moderate specific surface area and hardness, so that the heat resistance and ion conductivity of the separator can be better improved at the same time; the inorganic particles having the crystal forms γ and η have the advantage of a large specific surface area. By selecting different crystal forms of the first filler, it helps to improve at least one of the heat resistance, the ion conductivity, the bonding strength, the electrolytic solution wettability, and the electrolytic solution retention property of the separator.

In some embodiments, the inorganic particles with the secondary particle morphology may be prepared by the following method: A precursor solution of the inorganic particles is oxidized by high-pressure sputtering and then heated at 600 °C to 1200 °C (for example, 1 h to 3 h) to form inorganic particles with a primary particle morphology, followed by drying and shaping at 150 °C to 250 °C (for example, 30 min to 60 min) to obtain the inorganic particles with the secondary particle morphology (obtained by assembly of the primary particles).

In some embodiments, the second filler may include at least one of inorganic particles having a dielectric constant of 5 or more, inorganic particles having ion conductivity but not storing ions, and inorganic particles capable of undergoing electrochemical reactions.

Optionally, the inorganic particles having a dielectric constant of 5 or more may include at least one of the following: boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, 0 < m < 1, and 0 < n < 1), Pb(Mg₃Nb_{2/3})O₃-PbTiO₃ (abbreviated as PMN-PT), and respective modified inorganic particles thereof. Optionally, the manner of modification of the respective inorganic particles may be chemical modification and/or physical modification. Chemical modification includes coupling agent modification (such as using a silane coupling agent, a titanate coupling agent, etc.), surfactant modification, polymer grafting modification, etc. Physical modification includes mechanical dispersion, ultrasonic dispersion, high energy treatment, etc. The agglomeration of inorganic particles can be reduced by the modification treatment, thereby enabling the coating to have a more stable and uniform spatial network structure; in addition, by selecting a coupling agent, a surfactant, or a polymer having a specific functional group to modify the inorganic particles, the electrolytic solution wettability and electrolytic solution retention property of the coating and the adhesion of the coating to the porous substrate can also be improved.

Optionally, the inorganic particles having ion conductivity but not storing ions may include at least one of the following: Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium phosphorus sulfide Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, and 0 < z4 < 7. This can further increase the ion conductivity of the separator.

Optionally, the inorganic particles capable of undergoing electrochemical reactions may include at least one of a lithium-containing transition metal oxide, a lithium-containing phosphate, a carbon-based material, a silicon-based material, a tin-based material, and a lithium titanium compound.

In some embodiments, the second filler may include inorganic particles with a primary particle morphology, and the crystal form of the inorganic particles with the primary particle morphology may include at least one of crystal form α and crystal form γ, optionally crystal form α.

Optionally, the content of the inorganic particle with the primary particle morphology having the crystal form α in the inorganic particles with the primary particle morphology may be greater than or equal to 90 wt%, more optionally 95 wt% to 100 wt%, based on the total mass of the inorganic particles with the primary particle morphology.

The inorganic particle having the crystal form α has the advantages of high hardness, good heat resistance, low dielectric constant, high safety, and large true density, thereby further improving the heat resistance of the coating.

The inorganic particle having the crystal form θ has diffraction peaks at 2θ of 36.68°±0.2° and 31.21°±0.2° in an X-ray diffraction pattern measured by using an X-ray diffractometer. The inorganic particle having the crystal form γ has diffraction peaks at 2θ of 66.95°±0.2° and 45.91°±0.2° in an X-ray diffraction pattern measured by using an X-ray diffractometer. The inorganic particle having the crystal form η has diffraction peaks at 2θ of 31.89°±0.2° and 19.37°±0.2° in an X-ray diffraction pattern measured by using an X-ray diffractometer. The inorganic particle having the crystal form α has diffraction peaks at 2θ of 57.48°±0.2° and 43.34°±0.2° in an X-ray diffraction pattern measured by using an X-ray diffractometer.

The X-ray diffraction pattern of the inorganic particle may be obtained by the following test method: The inorganic particle is dried, ground in a mortar (such as an agate mortar) for 30 min, and then tested with an X-ray diffractometer (such as Miniflex 600-C) to obtain the X-ray diffraction pattern. The test is performed using a Cu target and a Ni filter at a tube pressure of 40 KV, a tube current of 15 mA, and a continuous scanning range of 5° to 80°.

In some embodiments, the coating may further include a non-particulate binder. The present application does not particularly limit the type of the non-particulate binder, and any material known to have good adhesion may be selected. Optionally, the non-particulate binder may include an aqueous solution-type binder, which has the advantages of good thermodynamic stability and environmental friendliness, thereby facilitating the preparation and coating operation of the coating slurry. As an example, the aqueous solution-type binder may include at least one of aqueous solution-type acrylic resins (e.g., homopolymers of acrylic acid, methacrylic acid, and sodium acrylate monomers or their copolymers with other comonomers), polyvinyl alcohol (PVA), isobutylene-maleic anhydride copolymer, and polyacrylamide.

Optionally, the content of the non-particulate binder in the coating may be less than or equal to 2 wt% based on the total mass of the coating. The fibrous material and the particulate filler in the coating can form a stable spatial network structure, so that the separator can maintain high adhesion while reducing the amount of the binder.

In some embodiments, the thickness of the coating may be less than or equal to 3 µm, optionally 0.3 µm to 2 µm, and more optionally 0.5 µm to 1.2 µm. This facilitates enhancing the energy density of the battery. The thickness of the coating refers to the thickness of the coating located on one side of the porous substrate.

The embodiments of the present application do not particularly limit the material of the porous substrate, and any substrate known to have good chemical stability and mechanical stability may be selected. For example, the porous substrate may include at least one of a porous polyolefin-based resin film (e.g., at least one of polyethylene, polypropylene, and polyvinylidene fluoride), a porous aramid film, a porous polyimide film, a porous glass fiber, and a porous non-woven fabric. The porous substrate may be a single-layer film or a multi-layer composite film. When the porous substrate is a multi-layer composite film, the materials of the layers may be the same or different.

In some embodiments, the thickness of the porous substrate may be less than or equal to 5 µm, optionally 3 µm to 4.5 µm.

In some embodiments, the separator may further include an adhesive layer, and the adhesive layer is disposed on at least a part of the surface of the coating. The adhesive layer can not only prevent the coating from falling off and improve the reliability of the battery, but also improve the interface between the separator and the electrode (e.g., the positive electrode or the negative electrode) and thereby improve the cycle performance of the battery.

In some embodiments, the adhesive layer may include a particulate binder. Optionally, the particulate binder may include at least one of acrylate monomer homopolymers or copolymers, acrylic acid monomer homopolymers or copolymers, and fluorinated olefin monomer homopolymers or copolymers.

The comonomers may include, but are not limited to at least one of the following: acrylate monomers, acrylic acid monomers, olefin monomers, halogen-containing olefin monomers, fluoroether monomers, and the like.

Optionally, the particulate binder may include a polyvinylidene fluoride-based polymer, such as a homopolymer of vinylidene fluoride monomer (VDF) and/or a copolymer of vinylidene fluoride monomer with comonomers. The comonomers may be at least one of olefin monomers, fluorinated olefin monomers, chlorinated olefin monomers, acrylate monomers, acrylic acid monomers, and fluoroether monomers. Optionally, the comonomer may include at least one of the following: trifluoroethylene (VF3), chlorotrifluoroethylene (CTFE), 1,2-difluoroethylene, tetrafluoroethylene (TFE), hexafluoropropylene (HFP), perfluoro(alkyl vinyl) ethers (e.g., perfluoro(methyl vinyl) ether PMVE, perfluoro(ethyl vinyl) ether PEVE, or perfluoro(propyl vinyl) ether (PPVE), perfluoro(1,3-dioxole), and perfluoro(2,2-dimethyl-1,3-dioxole) (PDD).

In some embodiments, the transverse direction thermal shrinkage and the machine direction thermal shrinkage of the separator at 150 °C for 1 h may be both less than 2%.

The separator has a low thermal shrinkage at a high temperature, so that the reliability of the battery can be improved.

In some embodiments, the air permeability of the separator may be less than or equal to 300 s/100 mL, optionally 100 s/100 mL to 240 s/100 mL.

The separator has good air permeability, so that the ion conductivity of the separator and the capacity performance characteristics of the battery can be improved.

In some embodiments, the wetting speed of the separator may be greater than or equal to 3 mm/s, optionally 5 mm/s to 15 mm/s.

Since the separator has good electrolytic solution wettability, the ion conductivity of the separator and the capacity performance characteristics of the battery can be improved.

The thermal shrinkage and air permeability of the separator both have the meanings well-known in the art and can be measured by methods known in the art. For example, all the tests may be performed with reference to the standard GB/T 36363-2018.

The wetting speed of the separator has the meaning well-known in the art and can be measured by methods known in the art. An exemplary test method is as follows: The separator is cut into samples with a width of 5 mm and a length of 100 mm, and both ends of the sample are fixed and then placed horizontally; 0.5 mg of the electrolytic solution is dropped at the center of the sample, and then after a specified time period (1 min in the present application), a photograph is taken and the diffusion length of the electrolytic solution is measured, thus obtaining the wetting speed of the separator. For the accuracy of the test result, a plurality of (for example, 5 to 10) samples may be taken for testing, and the test result is obtained by calculating an average value. The electrolytic solution can be prepared according to the following method: Ethylene carbonate (EC), ethyl methyl carbonate (EMC), and diethyl carbonate (DEC) are mixed in a mass ratio of 30:50:20 to obtain an organic solvent, and fully dried LiPF₆ is dissolved in the above organic solvent to prepare an electrolytic solution having a concentration of 1 mol/L.

It should be noted that the coating parameters (e.g., thickness) of the separator are all coating parameters on one side of the porous substrate. When the coating is disposed on both sides of the porous substrate, as long as the parameters of the coating on either side meet the requirements of the present application, the case is deemed to fall within the protection scope of the present application.

### [Preparation Method]

The present application further provides a method for preparing the separator described above.

The method includes the following steps: providing a porous substrate; mixing a first fibrous material, a second fibrous material, and a particulate filler in a solvent according to a predetermined ratio to prepare a coating slurry; and applying the coating slurry on at least one surface of the porous substrate and drying to obtain the separator.

In some embodiments, the solvent used in preparing the coating slurry may be water, such as deionized water.

In some embodiments, the coating slurry may further include other components. For example, it may further include a dispersant, a wetting agent, a binder, a surfactant, and the like.

In some embodiments, a coater may be used for applying the coating slurry. The present application does not particularly limit the model of the coater; for example, a commercially available coater may be used. The coater may include a gravure roller. The gravure roller is used to transfer the slurry to the porous substrate.

In some embodiments, the preparation method may further include the following steps: applying a slurry including a particulate binder on at least a part of the surface of the coating, and drying to form an adhesive layer.

For some raw materials used in the method for preparing a separator and their content and other parameters, reference may be made to the separator described above, and the details will not be repeated here.

Unless otherwise specified, all raw materials used in the method for preparing a separator are commercially available.

### [Positive Electrode Plate]

In some embodiments, the positive electrode plate may include a positive electrode current collector and a positive electrode film layer disposed on at least one surface of the positive electrode current collector and including a positive electrode active material. For example, the positive electrode current collector is provided with two surfaces opposite to each other in its own thickness direction, and the positive electrode film layer is disposed on any one or both of the two opposite surfaces of the positive electrode current collector.

When the battery is a lithium-ion battery, the positive electrode active material may include, but is not limited to, at least one of a lithium transition metal oxide, a lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further improve the energy density of the battery, the positive electrode active material of the lithium-ion battery may include at least one of a lithium transition metal oxide with a general formula LiₐNi_{b}Co_{c}M_{d}OₑA_{f} and modified compounds thereof, where 0.8 ≤ a ≤ 1.2, 0.5 ≤ b < 1, 0 < c < 1, 0 < d < 1, 1 ≤ e ≤ 2, 0 ≤ f ≤ 1, M includes, but is not limited to, at least one of Mn, Al, Zr, Zn, Cu, Cr, Mg, Fe, V, Ti, and B, and A includes, but is not limited to, at least one of N, F, S, and Cl.

As an example, the positive electrode active material for a lithium-ion battery may include, but is not limited to, at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.8}Co_{0.15}Al_{0.05}O₂, LiFePO₄, and LiMnPO₄.

When the battery is a sodium-ion battery, the positive electrode active material may include, but is not limited to, at least one of a sodium-containing transition metal oxide, a polyanionic material (such as phosphates, fluorophosphates, pyrophosphates, and sulfates), and a Prussian blue-type material.

As an example, the positive electrode active material for a sodium-ion battery may include, but is not limited to, at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue-type material, and a material with a general formula of XₚM'_{q}(PO₄)ᵣOₓY₃₋ₓ. In general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X includes, but is not limited to, at least one of H⁺, Li⁺, Na⁺, K⁺, and NH₄⁺, M' is a transition metal cation and optionally includes, but is not limited to, at least one of V, Ti, Mn, Fe, Co, Ni, Cu, and Zn, and Y is a halogen anion, optionally at least one of F, Cl, and Br.

The modified compounds of the above positive electrode active materials may be obtained by doping modification and/or surface-coating modification of the positive electrode active materials.

In some embodiments, the positive electrode film layer further optionally includes a positive electrode conductive agent. As an example, the positive electrode conductive agent may include, but is not limited to, at least one of superconducting carbon, conductive graphite, acetylene black, carbon black, Ketjen black, a carbon dot, a carbon nanotube, graphene, and a carbon nanofiber.

In some embodiments, the positive electrode film layer further optionally includes a positive electrode binder. As an example, the positive electrode binder may include, but is not limited to, at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, a metal foil or a composite current collector may be used as the positive electrode current collector. As an example of the metal foil, an aluminum foil may be used. The composite current collector may include a polymer material base layer and a metal material layer formed on at least one surface of the polymer material base layer. As an example, the metal material may include, but is not limited to, at least one of aluminum, an aluminum alloy, nickel, a nickel alloy, titanium, a titanium alloy, silver, and a silver alloy. As an example, the polymer material base layer may include, but is not limited to, at least one of polypropylene (PP), polyethylene terephthalate (PET), polybutylene terephthalate (PBT), polystyrene (PS), and polyethylene (PE).

The positive electrode film layer is generally formed by coating a positive electrode current collector with a positive electrode slurry, drying, and cold pressing. The positive electrode slurry is generally formed by dispersing a positive electrode active material, an optional positive electrode conductive agent, an optional positive electrode binder, and any other components in a solvent and stirring them uniformly. The solvent may be N-methylpyrrolidone (NMP), but is not limited thereto.

### [Negative Electrode Plate]

In some embodiments, the negative electrode plate may include a negative electrode current collector and a negative electrode film layer disposed on at least one surface of the negative electrode current collector and including a negative electrode active material. For example, the negative electrode current collector is provided with two surfaces opposite to each other in its own thickness direction, and the negative electrode film layer is disposed on any one or both of the two opposite surfaces of the negative electrode current collector.

The negative electrode active material may be any negative electrode active material known in the art for use in batteries. As an example, the negative electrode active material may include, but is not limited to, at least one of natural graphite, artificial graphite, soft carbon, hard carbon, a silicon-based material, a tin-based material, and lithium titanate. The silicon-based material may include, but is not limited to, at least one of elemental silicon, an oxide of silicon, a silicon-carbon composite, a silicon-nitrogen composite, and a silicon alloy material. The tin-based material may include, but is not limited to, at least one of elemental tin, an oxide of tin, and a tin alloy material.

In some embodiments, the negative electrode film layer further optionally includes a negative electrode conductive agent. As an example, the negative electrode conductive agent may include, but is not limited to, at least one of superconducting carbon, conductive graphite, acetylene black, carbon black, Ketjen black, a carbon dot, a carbon nanotube, graphene, and a carbon nanofiber.

In some embodiments, the negative electrode film layer further optionally includes a negative electrode binder. As an example, the negative electrode binder may include, but is not limited to, at least one of styrene-butadiene rubber (SBR), water-soluble unsaturated resin SR-1B, aqueous acrylic resin (e.g., polyacrylic acid (PAA), poly(methacrylic acid) (PMAA), and sodium polyacrylate (PAAS)), polyacrylamide (PAM), polyvinyl alcohol (PVA), sodium alginate (SA), and carboxymethyl chitosan (CMCS).

In some embodiments, the negative electrode film layer further optionally includes other auxiliary agents. As an example, other auxiliary agents may include a thickener, such as sodium carboxymethylcellulose (CMC) and PTC thermistor materials.

In some embodiments, a metal foil or a composite current collector may be used as the negative electrode current collector. As an example of the metal foil, a copper foil may be used. The composite current collector may include a polymer material base layer and a metal material layer formed on at least one surface of the polymer material base layer. As an example, the metal material may include, but is not limited to, at least one of copper, a copper alloy, nickel, a nickel alloy, titanium, a titanium alloy, silver, and a silver alloy. As an example, the polymer material base layer may include, but is not limited to, at least one of polypropylene (PP), polyethylene terephthalate (PET), polybutylene terephthalate (PBT), polystyrene (PS), and polyethylene (PE).

The negative electrode film layer is generally formed by coating a negative electrode current collector with a negative electrode slurry, drying, and cold pressing. The negative electrode slurry is generally formed by dispersing a negative electrode active material, an optional negative electrode conductive agent, an optional negative electrode binder, and other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate further includes a conductive bottom coating (e.g., composed of a conductive agent and a binder) interposed between the negative electrode current collector and the negative electrode film layer and disposed on the surface of the negative electrode current collector. In some embodiments, the negative electrode plate of the present application further includes a protective layer covering the surface of the negative electrode film layer.

### [Electrolytic Solution]

The electrolytic solution conducts ions between the positive electrode plate and the negative electrode plate.

In some embodiments, the electrolytic solution may include an electrolyte salt and an organic solvent.

When the battery is a lithium-ion battery, as an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

When the battery is a sodium-ion battery, as an example, the electrolyte salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate (NaPO₂F₂), sodium difluorobis(oxalato)phosphate (NaDFOP), and sodium tetrafluoro(oxalato)phosphate (NaTFOP).

In some embodiments, the organic solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution may further include an additive. As an example, the additive may include, but is not limited to, one or more of fluoroethylene carbonate (FEC), 1,3-propane sultone (PS), and vinylene carbonate (VC).

Optionally, the total mass of the additive may be 0.5 wt% to 12 wt%, optionally 2 wt% to 8 wt%, of the total mass of the electrolytic solution.

Methods for preparing a battery cell are well known. In some embodiments, the positive electrode plate, the separator, the negative electrode plate, and the electrolytic solution may be assembled to form a battery cell. As an example, the positive electrode plate, the separator, and the negative electrode plate may form an electrode assembly through a winding process and/or a stacking process. The electrode assembly is placed in an outer packaging, followed by drying and then injection of the electrolytic solution described above. After procedures such as vacuum packaging, standing, and formation, a battery cell is obtained. A plurality of battery cells may be further connected in series or in parallel or in series-parallel to form a battery module. A plurality of battery modules may be further connected in series or in parallel or in series-parallel to form a battery pack. In some embodiments, a plurality of battery cells may also directly constitute a battery pack.

Embodiments of the present application further provide an electric device, which includes the battery provided in the embodiments of the present application. The battery may be used as a power source for the electric device, or as an energy storage unit for the electric device. The electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

The electric device can select a type of battery according to its use requirements, such as a battery cell, a battery module, or a battery pack.

FIG. 6 is a schematic view of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a laptop computer, or the like. The electric device is generally required to be light and thin, and a battery cell may thus be used as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are all commercially available.

The nanocellulose used in the present application may be commercially available or may be prepared by the following method.

### Preparation of nanocellulose

The cotton linter was opened and cleaned by a cotton opener and then cooked with a 5 wt% aqueous NaOH solution at 150 °C for 2 h, and then water washing for impurity removal (water washing for 3 times), bleaching with sodium hypochlorite, washing with dilute hydrochloric acid for impurity removal, water washing for impurity removal (water washing for 1 time), dewatering, and airflow drying were performed in sequence to obtain a cotton cellulose powder with a whiteness greater than or equal to 85%.

1 kg of the obtained cotton cellulose powder was mixed with 30 kg of a 60 wt% aqueous sulfuric acid solution, and the mixture was reacted at 55 °C to 60 °C for 0.5 h to 1.5 h. After the reaction was completed, water washing for impurity removal (water washing for 3 times), filtering, and disacidifying for impurity removal were performed. The pH was adjusted to neutrality with a 10 wt% aqueous NaOH solution, followed by grinding with a grinder and nano-scale cutting with a high-pressure homogenizer device, thus obtaining nanocellulose having a modifying group sulfonic acid group, with the molar ratio of the sulfonic acid group to the surface hydroxyl group being 3:3 to 5:3.

During the preparation, by adjusting the reaction concentration, the reaction time, and the parameters of the grinder for processing as well as the cutting parameters of the high-pressure homogenizer device, nanocellulose with different average diameters and/or different average lengths can be obtained and used as a first nanocellulose and a second nanocellulose.

### Example 1

### Preparation of positive electrode plate

A positive electrode active material LiNi_{0.8}Co_{0.1}Mn_{0.1}O₂, a conductive agent acetylene black, and a binder polyvinylidene fluoride were mixed at a mass ratio of 94:3:3, an appropriate amount of solvent NMP was added, and the mixture was stirred uniformly to obtain a positive electrode slurry. The positive electrode slurry was applied on two surfaces of a positive electrode current collector aluminum foil, and the aluminum foil was then subjected to drying, cold pressing, and slitting to obtain the positive electrode plate.

### Preparation of negative electrode plate

A negative electrode active material artificial graphite, a conductive agent acetylene black, a binder styrene-butadiene rubber (SBR), and sodium carboxymethylcellulose (CMC) were mixed uniformly in an appropriate amount of solvent deionized water at a mass ratio of 95:2:2:1 to obtain a negative electrode slurry. The negative electrode slurry was applied on a negative electrode current collector copper foil, and the copper foil was then subjected to drying, cold pressing, and slitting to obtain the negative electrode plate.

### Preparation of separator

A PE porous substrate having a thickness of 4.5 µm was provided.

Preparation of coating slurry: A first fibrous material, a second fibrous material, a first filler, a second filler, and a binder polyacrylic acid were mixed uniformly in an appropriate amount of solvent deionized water at a mass ratio of 10:18:52:18:2 to obtain the coating slurry.

The first nanocellulose was used as the first fibrous material, and it had an average length of 1500 nm, an average diameter of 50 nm, and an aspect ratio of 30.

The second nanocellulose was used as the second fibrous material, and it had an average length of 350 nm, an average diameter of 20 nm, and an aspect ratio of 17.5.

Aluminum oxide with a secondary particle morphology was used as the first filler, the volume distribution particle size Dv50 was 140 nm, and the contents of the crystal form α, the crystal form θ, the crystal form γ, and the crystal form η in the aluminum oxide were 1.1 wt%, 68.7 wt%, 29.6 wt%, and 0.6 wt%, respectively, based on the total mass of the aluminum oxide.

Aluminum oxide with a primary particle morphology was used as the second filler, the volume distribution particle size Dv50 was 320 nm, and the crystal form of the aluminum oxide was mainly the crystal form α, whose content was 99 wt% or more based on the total mass of the aluminum oxide.

Coating: The prepared coating slurry was applied on two surfaces of the PE porous substrate by micro-gravure coating, followed by procedures including drying and slitting to obtain the separator. The thickness of the coating on one side of the PE porous substrate was 0.75 µm.

### Preparation of electrolytic solution

Ethylene carbonate (EC) and ethyl methyl carbonate (EMC) were mixed at a mass ratio of 20:80 to obtain an organic solvent. Fully dried LiPF₆ was dissolved in the above organic solvent to prepare an electrolytic solution having a concentration of 1 mol/L, and then fluoroethylene carbonate (FEC) and 1,3-propane sultone (PS) were added. The mass content of FEC was 3 wt% of the total mass of the electrolytic solution, and the mass content of PS was 0.5 wt% of the total mass of the electrolytic solution.

### Preparation of battery

The positive electrode plate, the separator, and the negative electrode plate were stacked in sequence and wound to obtain an electrode assembly. The electrode assembly was placed into an outer packaging aluminum shell, followed by drying and injection of the electrolytic solution. After procedures such as vacuum packaging, standing, formation, and shaping, the battery was obtained.

### Example 2

The battery was prepared by a method similar to that of Example 1, except that in the preparation of the separator, the second fibrous material had an average length of 250 nm, an average diameter of 20 nm, and an aspect ratio of 12.5.

### Example 3

The battery was prepared by a method similar to that of Example 1, except that in the preparation of the separator, the second fibrous material had an average length of 550 nm, an average diameter of 20 nm, and an aspect ratio of 27.5.

### Example 4

The battery was prepared by a method similar to that of Example 1, except that in the preparation of the separator, the first fibrous material had an average length of 850 nm, an average diameter of 50 nm, and an aspect ratio of 17.

### Example 5

The battery was prepared by a method similar to that of Example 1, except that in the preparation of the separator, the first fibrous material had an average length of 1050 nm, an average diameter of 50 nm, and an aspect ratio of 21.

### Example 6

The battery was prepared by a method similar to that of Example 1, except that in the preparation of the separator, the first fibrous material had an average length of 2000 nm, an average diameter of 50 nm, and an aspect ratio of 40.

### Example 7

The battery was prepared by a method similar to that of Example 1, except that in the preparation of the separator, the first fibrous material had an average length of 3000 nm, an average diameter of 50 nm, and an aspect ratio of 60.

### Example 8

The battery was prepared by a method similar to that of Example 1, except that in the preparation of the separator, the mass ratio of the first fibrous material, the second fibrous material, the first filler, the second filler, and the binder polyacrylic acid was 15:13:52:18:2.

### Comparative Example 1

The battery was prepared by a method similar to that of Example 1, except that in the preparation of the separator, the second fibrous material was not added to the coating slurry, and the mass ratio of the first fibrous material, the first filler, the second filler, and the binder polyacrylic acid was 28:52:18:2.

### Performance Testing

### (1) Battery performance test in thermal box

At 25 °C, batteries were charged to 4.2 V at a constant current of 1C, then charged at a constant voltage until the current was less than or equal to 0.05C, and then left to stand for 5 min. Then, the batteries with clamping fixtures were tested in a DHG-9070ADHG series high-temperature oven, where the temperature was raised from 25 °C to 60 °C±2 °C at a rate of 5 °C/min and held for 30 min, and then raised at a rate of 5 °C/min, with the temperature held for 30 min when raised by 5 °C each time. The temperature of the thermal box and the heat preservation time when the battery failed were recorded. The higher the thermal box failure temperature of the battery, the better the thermal stability of the battery. When the thermal box failure temperatures of the battery were the same, the longer the hold time, the better the thermal stability of the battery. For the sake of accuracy, the average value of 5 parallel samples was taken as the test result.

### (2) Cycle performance test of battery

At 25 °C, the battery was charged to 4.2 V at a constant current of 0.33C, and then charged at a constant voltage until the current was less than or equal to 0.05C. At this time, the battery was in a fully charged state, and the charge capacity at this time was recorded as the charge capacity of the first cycle; the battery was left to stand for 5 min and then discharged to 2.8 V at a constant current of 1C. This was a cyclic charging and discharging process, and the discharge capacity at this time was recorded as the discharge capacity of the first cycle. The battery was subjected to a cyclic charging and discharging test according to the above method, and the discharge capacity after each cycle was recorded. Capacity retention rate (%) of the battery after 1000 cycles at 25 °C = discharge capacity after 1000 cycles/discharge capacity of the first cycle × 100%. For the sake of accuracy, the average value of 5 parallel samples was taken as the test result.

The test results of Examples 1-8 and Comparative Example 1 are shown in Table 1.

**Table 1**

| Serial number | First fibrous material | | | | Second fibrous material | | | | L₁/L₂ | First filler | | Second filler | | L₁/D₂ | L₂/D₁ | Thermal box failure temperature/hold time | Capacity retention rate after 1000 cycles at 25 °C |
|---|---|---|---|---|---|---|---|---|---|---|---|---|---|---|---|---|---|
| | Average length Li (nm) | Average diameter (nm) | Aspect ratio | Content W₁₁ | Average length L₂ (nm) | Average diameter (nm) | Aspect ratio | Content W₁₂ | | Morphology | Average particle size D₁ (nm) | Morphology | Average particle size D₂ (nm) | | | | |
| Example 1 | 1500 | 50 | 30 | 10.0% | 350 | 20 | 17.5 | 18.0% | 4.29 | Secondary particle | 140 | Primary particle | 320 | 4.7 | 2.5 | 135 °C/29 min | 92.06% |
| Example 2 | 1500 | 50 | 30 | 10.0% | 250 | 20 | 12.5 | 18.0% | 6.00 | Secondary particle | 140 | Primary particle | 320 | 4.7 | 1.8 | 135 °C/13 min | 91.10% |
| Example 3 | 1500 | 50 | 30 | 10.0% | 550 | 20 | 30 | 18.0% | 2.73 | Secondary particle | 140 | Primary particle | 320 | 4.7 | 3.9 | 135 °C/20 min | 92.09% |
| Example 4 | 850 | 50 | 17 | 10.0% | 350 | 20 | 17.5 | 18.0% | 2.43 | Secondary particle | 140 | Primary particle | 320 | 2.7 | 2.5 | 130 °C/15 min | 90.80% |
| Example 5 | 1050 | 50 | 21 | 10.0% | 350 | 20 | 17.5 | 18.0% | 3.00 | Secondary particle | 140 | Primary particle | 320 | 3.3 | 2.5 | 135 °C/18 min | 91.60% |
| Example 6 | 2000 | 50 | 40 | 10.0% | 350 | 20 | 17.5 | 18.0% | 5.71 | Secondary particle | 140 | Primary particle | 320 | 6.3 | 2.5 | 135 °C/14 min | 91.50% |
| Example 7 | 3000 | 50 | 60 | 10.0% | 350 | 20 | 17.5 | 18.0% | 8.57 | Secondary particle | 140 | Primary particle | 320 | 9.4 | 2.5 | 130 °C/26 min | 91.21% |
| Example 8 | 1500 | 50 | 30 | 15.0% | 350 | 20 | 17.5 | 13.0% | 4.29 | Secondary particle | 140 | Primary particle | 320 | 4.7 | 2.5 | 135 °C/7 min | 91.89% |
| Comparative Example 1 | 1500 | 50 | 30 | 28.0% | / | / | / | / | / | Secondary particle | 140 | Primary particle | 320 | 4.7 | / | 130 °C/10 min | 90.01% |

It can be seen from the test results in Table 1 that by allowing the fibrous material in the separator coating to include both the first fibrous material and the second fibrous material and allowing the average length L₁ of the first fibrous material and the average length L₂ of the second fibrous material satisfy that L₁ is greater than 800 nm and L₁/L₂ ≥ 2.4, the battery can have high thermal stability and good cycle performance.

It can also be seen from the test results of Examples 1-7 that by further adjusting one or more of the average length L₁ of the first fibrous material, the average length L₂ of the second fibrous material, the average particle size D₁ of the first filler, the average particle size D₂ of the second filler, L₁/L₂, L₁/D₂, and L₂/D₁, the thermal stability and cycle performance of the battery can be further improved.

It can also be seen from the test results of Example 1 and Example 8 that by allowing the content of the first fibrous material in the separator coating to be less than the content of the second fibrous material, the cycle performance of the battery can be further improved.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A separator, comprising a porous substrate and a coating disposed on at least one surface of the porous substrate, wherein the coating comprises a fibrous material and a particulate filler, the fibrous material comprises a first fibrous material and a second fibrous material, an average length of the first fibrous material is denoted as L₁, an average length of the second fibrous material is denoted as L₂, L₁ is greater than 800 nm, and L₁/L₂ ≥ 2.4.

2. The separator according to claim 1, wherein L₁/L₂ is 2.4-9.0, optionally 2.7-5.8.

3. The separator according to any one of claims 1 to 2, wherein
the average length L₁ of the first fibrous material is 850 nm to 3000 nm, optionally 1000 nm to 2000 nm; and/or
the average length L₂ of the second fibrous material is 200 nm to 800 nm, optionally 300 nm to 550 nm.

4. The separator according to any one of claims 1 to 3, wherein an average diameter of the first fibrous material is greater than an average diameter of the second fibrous material;
optionally, the average diameter of the first fibrous material is less than or equal to 100 nm, more optionally 25 nm to 75 nm;
optionally, the average diameter of the second fibrous material is 12 nm to 40 nm, more optionally 15 nm to 32 nm.

5. The separator according to any one of claims 1 to 4, wherein an aspect ratio of the first fibrous material is greater than an aspect ratio of the second fibrous material;
optionally, the aspect ratio of the first fibrous material is 12-100, more optionally 20-50;
optionally, the aspect ratio of the second fibrous material is 10-70, more optionally 15-40.

6. The separator according to any one of claims 1 to 5, wherein a content of the first fibrous material is less than a content of the second fibrous material;
optionally, the content of the first fibrous material is denoted as W₁₁, and the content of the second fibrous material is denoted as W₁₂, both based on a total mass of the coating; W₁₁/W₁₂ is 0.20-0.95, more optionally 0.40-0.75;
optionally, the content of the first fibrous material is denoted as W₁₁, and W₁₁ is 5 wt% to 13 wt% based on the total mass of the coating;
optionally, the content of the second fibrous material is denoted as W₁₂, and W₁₂ is 9 wt% to 21 wt% based on the total mass of the coating.

7. The separator according to any one of claims 1 to 6, wherein
the first fibrous material and the second fibrous material each independently comprise at least one of an organic fibrous material and an inorganic fibrous material;
optionally, the organic fibrous material comprises at least one of nanocellulose, polytetrafluoroethylene nanofiber, and polyamide nanofiber;
optionally, the inorganic fibrous material comprises at least one of halloysite nanotube, nanorod-shaped aluminum oxide, nanorod-shaped boehmite, nanorod-shaped silicon oxide, and glass fiber.

8. The separator according to any one of claims 1 to 7, wherein the first fibrous material and the second fibrous material each independently comprise the nanocellulose;
optionally, the nanocellulose comprises a modifying group, and the modifying group comprises at least one of an amine group, a carboxyl group, an aldehyde group, a sulfonic acid group, and a phosphoric acid group, more optionally at least one of a sulfonic acid group and a phosphoric acid group;
optionally, the nanocellulose comprises a hydroxyl group and a modifying group, and a molar ratio of the modifying group to the hydroxyl group is 1:4 to 4:1, more optionally 2:3 to 7:3.

9. The separator according to any one of claims 1 to 8, wherein the particulate filler comprises a first filler and a second filler, and an average particle size D₁ of the first filler is less than an average particle size D₂ of the second filler;
the average particle size D₁ of the first filler and the average particle size D₂ of the second filler satisfy that D₂/D₁ ≥ 1.2; optionally, D₂/D₁ is 1.5-16, more optionally 2-8.

10. The separator according to claim 9, wherein the first filler has a secondary particle morphology, and the second filler has a primary particle morphology.

11. The separator according to any one of claims 9 to 10, wherein
a ratio L₁/D₂ of the average length L₁ of the first fibrous material to the average particle size D₂ of the second filler is 3.0-5.0; and/or
a ratio L₂/D₁ of the average length L₂ of the second fibrous material to the average particle size D₁ of the first filler is 2.0-4.0.

12. The separator according to any one of claims 9 to 11, wherein
the average particle size D₁ of the first filler is less than 200 nm, optionally 50 nm to 185 nm; and/or
the average particle size D₂ of the second filler is 200 nm to 800 nm, optionally 210 nm to 400 nm.

13. The separator according to any one of claims 9 to 12, wherein an average particle size of primary particles constituting the first filler is 10 nm to 50 nm, optionally 15 nm to 35 nm.

14. The separator according to any one of claims 9 to 13, wherein a specific surface area of the first filler is greater than a specific surface area of the second filler;
optionally, the specific surface area of the first filler is greater than or equal to 20 m²/g, more optionally 30 m²/g to 80 m²/g;
optionally, the specific surface area of the second filler is less than 20 m²/g, more optionally 5 m²/g to 15 m²/g.

15. The separator according to any one of claims 9 to 14, wherein a content of the first filler is greater than a content of the second filler;
optionally, the content of the first filler is denoted as W₂₁, and the content of the second filler is denoted as W₂₂, both based on the total mass of the coating; W₂₂/W₂₁ is 0.10-0.80, more optionally 0.25-0.50;
optionally, the content of the first filler is denoted as W₂₁, and W₂₁ is 20 wt% to 70 wt%, more optionally 36 wt% to 61.5 wt%, based on the total mass of the coating;
optionally, the content of the second filler is denoted as W₂₂, and W₂₂ is 5 wt% to 60 wt%, more optionally 10 wt% to 35 wt%, based on the total mass of the coating.

16. The separator according to any one of claims 9 to 15, wherein
the first filler comprises at least one of an inorganic particle and an organic particle; optionally, the inorganic particle comprises at least one of boehmite, aluminum oxide, barium sulfate, magnesium oxide, magnesium hydroxide, silicon-oxygen compound, tin dioxide, titanium oxide, calcium oxide, zinc oxide, zirconium oxide, yttrium oxide, nickel oxide, hafnium dioxide, cerium oxide, zirconium titanate, barium titanate, and magnesium fluoride; more optionally, the inorganic particle comprises at least one of boehmite, aluminum oxide, barium sulfate, magnesium oxide, silicon-oxygen compound, titanium oxide, zinc oxide, cerium oxide, and barium titanate; optionally, the organic particle comprises at least one of polystyrene and polyacrylic acid wax; and/or
the second filler comprises at least one of inorganic particles having a dielectric constant of 5 or more, inorganic particles having ion conductivity but not storing ions, and inorganic particles capable of undergoing electrochemical reactions.

17. The separator according to any one of claims 9 to 16, wherein the first filler comprises inorganic particles with a secondary particle morphology, and a crystal form of the inorganic particles with the secondary particle morphology comprises at least two of crystal form α, crystal form θ, crystal form γ, and crystal form η; optionally, the crystal form of the inorganic particles with the secondary particle morphology comprises at least two of the crystal form α, the crystal form θ, and the crystal form γ;
optionally, a content of the inorganic particle with the secondary particle morphology having the crystal form α in the inorganic particles with the secondary particle morphology is greater than or equal to 1.2 wt%, more optionally 1.2 wt% to 10 wt%, based on a total mass of the inorganic particles with the secondary particle morphology;
optionally, a content of the inorganic particle with the secondary particle morphology having the crystal form θ in the inorganic particles with the secondary particle morphology is greater than or equal to 50 wt%, more optionally 60 wt% to 85 wt%, based on a total mass of the inorganic particles with the secondary particle morphology;
optionally, a content of the inorganic particle with the secondary particle morphology having the crystal form γ in the inorganic particles with the secondary particle morphology is greater than or equal to 10 wt%, more optionally 15 wt% to 60 wt%, based on a total mass of the inorganic particles with the secondary particle morphology;
optionally, a content of the inorganic particle with the secondary particle morphology having the crystal form η in the inorganic particles with the secondary particle morphology is less than or equal to 5 wt%, more optionally less than or equal to 2 wt%, based on a total mass of the inorganic particles with the secondary particle morphology.

18. The separator according to any one of claims 9 to 17, wherein the second filler comprises inorganic particles with a primary particle morphology, and a crystal form of the inorganic particles with the primary particle morphology comprises at least one of crystal form α and crystal form γ, optionally crystal form α;
optionally, a content of the inorganic particle with the primary particle morphology having the crystal form α in the second filler is greater than or equal to 90 wt%, more optionally 95 wt% to 100 wt%, based on a total mass of the second filler.

19. The separator according to any one of claims 1 to 18, wherein the coating further comprises a non-particulate binder;
optionally, the non-particulate binder comprises an aqueous solution-type binder;
optionally, a content of the non-particulate binder in the coating is less than or equal to 2 wt% based on the total mass of the coating.

20. The separator according to any one of claims 1 to 19, further comprising an adhesive layer disposed on at least a part of a surface of the coating, wherein
optionally, the adhesive layer comprises a particulate binder;
more optionally, the particulate binder comprises at least one of acrylate monomer homopolymers or copolymers, acrylic acid monomer homopolymers or copolymers, and fluorinated olefin monomer homopolymers or copolymers.

21. The separator according to any one of claims 1 to 20, wherein the separator satisfies at least one of the following conditions (1) to (5):
(1) a thickness of the porous substrate is less than or equal to 5 µm, optionally 3 µm to 4.5 µm;
(2) a thickness of the coating is less than or equal to 3 µm, optionally 0.3 µm to 2 µm;
(3) a transverse direction thermal shrinkage and a machine direction thermal shrinkage of the separator at 150 °C for 1 h are both less than 2%;
(4) an air permeability of the separator is less than or equal to 300 s/100 mL, optionally 100 s/100 mL to 240 s/100 mL;
(5) a wetting speed of the separator is greater than or equal to 3 mm/s, optionally 5 mm/s to 15 mm/s.

22. A battery cell, comprising the separator according to any one of claims 1 to 21.

23. An electric device, comprising the battery according to claim 22.
